# EUROPÄISCHE PATENTANMELDUNG

(11) **EP 2 254 210 A1**
(43) Veröffentlichungstag der Anmeldung: **24.11.2010**
(21) Anmeldenummer: 10000429.0
(22) Anmeldetag: 18.01.2010
(51) Int. Cl.: H02B 13/045, H02B 13/035

(54) **Metallgekapseltes Hochspannungsschaltanlagengehäuse einer gasisolierten Hochspannungsschaltanlage**

(30) Priorität: 20.05.2009 DE 102009022103; 20.05.2009 DE 102009022105
(71) Anmelder: ABB Technology AG, 8050 Zürich (CH)
(72) Erfinder: Zwicky, Daniel, 5443 Niederrohrdorf (CH); Saxl, David, 8046 Zürich (CH); Schalber, Horst, 61137 Schöneck (DE); Amberg, Markus, 63791 Karlstein (DE); Kuhl, Daniel, 60386 Frankfurt (DE)
(74) Vertreter: Partner, Lothar

(57) **Zusammenfassung**

Hochspannungsschaltanlagengehäuse, umfassend eine Kammer zur Aufnahme von mindestens zwei Phasenleitern unterschiedlichen elektrischen Potentials im Betrieb des Hochspannungsschaltanlagengehäuses, wobei die Kammer von ausserhalb des Hochspannungsschaltanlagengehäuses über mindestens zwei Anschlussöffnungen zugänglich ist, und wobei die mindestens zwei Phasenleiter im Betrieb des Hochspannungsschaltanlagengehäuses in der Kammer durch ein Isoliergas elektrisch voneinander isoliert angeordnet sind. Dabei sind die mindestens zwei Anschlussöffnungen flächenmäßig in einer ersten Öffnungs-Ebene (E1) und entlang einer ersten Gerade (4) angeordnet. Weiter bilden die mindestens zwei ersten Anschlussöffnungen eine erste Anschlussgruppe von Anschlussöffnungen. Die mindestens zwei ersten Anschlussöffnungen sind zur Aufnahme jeweils eines Phasenleiters geformt und münden umfangsseitig in einen gemeinsamen flanschartigen Adapterabschnitt, der zum mechanischen Anschliessen des Hochspannungsschaltanlagengehäuses an ein benachbartes Hochspannungsschaltanlagengehäuse dient.

## Beschreibung

Die vorliegende Erfindung betrifft ein metallgekapseltes Hochspannungsschaltanlagengehäuse einer gasisolierten HochspannungsSchaltanlage. Solche gattungsgemässe Gehäuse dienen zur partiellen Umschliessung und allenfalls Positionierung von Primärleitern und allfälligen weiteren Komponenten und bilden beispielsweise ein modulares Flanschgehäuse zur Verbindung mit einer dreiphasigen Sammelschiene.

Bei typischen gasisolierten Hochspannungsanlagen ist eine modulare Bauweise der Funktionsgruppen wie Leistungsschalter, Erdschalter usw. bekannt. Auf dem Markt sind derzeit hauptsächlich GIS-Schaltanlagen, deren Felder eine einphasige oder eine dreiphasig gekapselte Führung der Primärleiter aufweisen.
Ein Vertreter eines Gehäuses für eine dreiphasig gekapselte Führung der Primärleiter ist beispielsweise in der WO 2008/022893 A1 offenbart.
Unter einphasiger Kapselung wird ein Gasraum für einen Primärleiter verstanden, während unter dreiphasiger Kapselung die Anordnung dreier Primärleiter in einem gemeinsamen Gasraum verstanden wird. Unter Primärleitern werden Leiter verstanden, welche eine Nennlast im Hochspannungsbereich aufweisen.
Um eine gasisolierte Unterstation zu realisieren, werden typischerweise mindestens zwei Felder eingangsseitig oder ausgangsseitig mit einer sogenannten

Sammelschiene verbunden. Dabei umfasst der Begriff Sammelschiene sowohl einals auch dreifach gekapselt geführte Primärleiterschienen.
Aufgrund der zunehmenden Nachfrage nach kleineren, aber dennoch leistungsfähigen GIS für Hochspannungsanlagen, kommt der Kompaktheit einer GIS eine entscheidende Bedeutung zu.
Da GIS-Schaltanlagen jedoch häufig auch in Ballungsgebieten oder anderen räumlich beengten Gebieten eingesetzt werden, kommt neben der Leistungsfähigkeit auch der Kompaktheit einer Unterstation eine wichtige Bedeutung zu. Um diese beiden Anforderungen zu bedienen, ist es angestrebt, die Leistungsdichte (pro Bauvolumen) eines GIS-Schalt-feldes zu erhöhen. Auch der Wartungsfreundlichkeit einer GIS-Schaltanlage kommt eine hohe Bedeutung zu. Wenn von einer GIS beispielsweise zudem höhere elektrische Leistungen bei gleichbleibendem Schutzgas und gleichbleibendem Funktionsaufbau und gleichbleibenden Materialien gefordert werden, wirkt sich das in der Regel negativ auf die Abmessungen der GIS aus, da die GIS aufgrund vergrösserter Gehäusedurchmesser weniger Kompakt realisiert werden kann.
Es ist eine Aufgabe der vorliegenden Erfindung, ein Hochspannungsschaltanlagengehäuse vorzulegen, welches eine kompaktere Bauweise eines Schaltfeldes und einer Unterstation ermöglicht.
Diese Aufgabe wird mit dem Gegenstand nach Anspruch 1 oder 15 gelöst. In einer Basisausführungsform umschliesst das Hochspannungsschaltanlagengehäuse eine Kammer, d.h. ein Innenvolumen, zur Aufnahme von mindestens zwei Phasenleitern unterschiedlichen elektrischen Potentials grösstenteils. Die Kammer ist von ausserhalb des Hochspannungsschaltanlagengehäuses über mindestens zwei erste Anschlussöffnungen zugänglich, insbesondere um den elektrischen Zugang zu den Phasenleitern in der Kammer zu ermöglichen. Die mindestens zwei Anschlussöffnungen bilden eine erste Anschlussgruppe von ersten Anschlussöffnungen und sind zur Aufnahme jeweils einem Phasenleiters entsprechend geformt. Die mindestens zwei ersten Anschlussöffnungen münden jeweils in einen ersten flanschartigen Adapterabschnitt, die zum mechanischen Anschliessen des Hochspan-nungsschaltanlagengehäuses - nachstehend vereinfachend nur 'Gehäuse' genannt - an ein benachbartes Hochspannungsschaltanlagengehäuse dienen. Die mindestens zwei ersten Anschlussöffnungen sind flächenmäßig in einer ersten Öffnungs-Ebene und entlang einer ersten Geraden angeordnet.
Das erfindungsgemässe Gehäuse weist zudem mindestens zwei zweite Anschlussöffnungen auf, welche eine zweite Anschlussgruppe bilden. Auch die zweiten Anschlussöffnungen sind jeweils zur Aufnahme eines separaten Phasenleiters geformt und münden umfangsseitig in zweite flanschartige Adapterabschnitte. Diese zweiten flanschartigen Adapterabschnitte dienen zum mechanischen Anschliessen des Gehäuses an ein weiteres benachbartes Hochspannungsschaltanlagengehäuse. Analog zur ersten Anschlussgruppe sind auch die mindestens zwei zweiten Anschlussöffnungen flächenmäßig in einer zweiten Öffnungs-Ebene entlang einer zweiten Geraden angeordnet.

Um die äusseren Abmessungen des Gehäuses möglichst gering halten zu können, muss dass Gehäuse kammerseitig dielektrisch möglichst optimal sein. Dies bedingt, dass zumindest an kritischen Stellen keine lokalen Vorsprünge des Gehäuses in die Kammer hinein ragen und dass die Oberfläche eine genügend geringe Oberflächenqualität aufweist, welche beispielsweise mittels einer geringen Rauheit und/oder einer Beschichtung erreicht wird.
Es ist allgemein bekannt, gasisolierte Hochspannungsschaltanlagen über ebenfalls gasisolierte Sammelschienen mit anderen Schaltgerätekomponenten, wie Trennschalter oder Erdungsschalter, zu verbinden, wobei die Sammelschienen als Rohre ausgebildet sind.

Ein Vorteil eines derartigen Gehäuses liegt darin, dass es dem damit realisierbaren GIS-Modul die Eigenschaft verleiht, dass die Leistungsdichte (pro Bauvolumen) eines GIS-Schaltfeldes und/oder einer Unterstation im Vergleich zu konventionellen Gehäusen bzw. Modulen wesentlich erhöht werden kann. Dies daher, dass durch den gemeinsamen Gasraum der Phasenleiter in der Kammer eine kompakte modulare Bauweise eines Sammelschienen-Moduls ermöglicht wird, wobei die separaten Anschlussöffnungen, beispielsweise Sammelschienen- Anschlussöffnungen, zugleich eine Verwendung in einem ansonsten zumindest teilweise einphasig gekapselten Schaltfeld erlauben, das für einen Hochspanngseinsatz tauglich ist. Die Vorteile einer einphasig gekapselten Primärleiterführung, insbesondere im Bereich der Sammelschiene werden somit mit Vorteilen einer dreiphasig gekapselten Modulbauweise vereinigt. Je nach Bedarf und je nach Ausführungsform der Adapterabschnitte sind einphasig gekapselte Gehäuse anderer Geräte oder Verbindungen zu Schaltfeldern realisierbar, unabhängig von der Tatsache, dass die Phasenleiter in der Kammer dreiphasig gekapselt angeordnet sind. So ist etwa durch den gemeinsamen Gasraum in der Kammer im Betrieb eine vereinfachte Überwachung des Gasdrucks und insgesamt eine Reduktion des Gehäusematerials und des erforderlichen Gasvolumens ermöglicht. Auch sind nur eine einzige Befüllung mit Isoliergas, eine einzige Überwachung des Gases und eine einzige Überdruckschutzmechanik erforderlich. Ein gemeinsames Gehäuse für drei Phasen wiegt darüber hinaus auch weniger und ist in der Regel kostengünstiger als drei separate Gehäuse. Zusätzlich wird durch die Anordnung der Öffnungen ein Gehäuse nicht nur mit geringen äußeren Abmessungen, sondern auch mit geringem Innenvolumen ermöglicht, so dass auch das Schutzgas-Füllvolumen reduziert werden kann. Zur potentiell platzsparenden Bauweise trägt zusätzlich bei, dass die Primäranschlüsse nahe beieinander angeordnet werden können.

Weiter wird durch die Anordnung der Anschlussöffnungen entlang jeweiliger Geraden und durch eine geeignete Orientierung dieser Geraden im Raum eine platzsparende Bauweise erreichbar. Somit lassen sich selbst bei beengten Platzverhältnissen von der ersten Anschlussgruppe abgehende Leiter in Richtung der zweiten Anschlussgruppe weiterführen, ohne dass sich die Leiter beispielsweise bei einer Relativposition der ersten Ebene und der zweiten Ebene unter einem Winkel gegenseitig in die Quere zu kommen. Dies ist insofern sehr vorteilhaft, als dass sich mit dieser Anordnung ein Einsatz von kostspieligen Freiformstücken, wie sie etwa aus Phasenleiterauskreuzungen bekannt sind, vermeiden oder zumindest stark vereinfachen lässt. Bei einer Anordnung der Anschlussöffnungen in einem Einheits-Abstand ist das Gehäuse als Teil eines einheitlichen modularen Systems einer GIS-Schaltanlage einsetzbar. Insbesondere im Rahmen eines Modulsystems besteht ein Vorteil in der vielseitigen Verwendbarkeit des Gehäuses bzw. eines das Gehäuse umfassenden Schaltanlagenmoduls. Das Vorhandensein von gegenüberliegenden ersten und zweiten Sammelschienen-Öffnungen erlaubt beispielsweise eine vielseitige Verwendbarkeit des Gehäuses in verschiedenen Orientierungen sowie eine Hintereinanderschaltung mehrerer Module entlang einer durchgehenden Sammelschiene. Mit anderen Worten ist das Gehäuse bei Bedarf als ein Segment einer Sammelschiene, insbesondere einer dreiphasigen Sammelschiene einer Schaltanlage einsetzbar. Weitere Vorteile ergeben sich, wenn das Gehäuse Symmetrieeigenschaften aufweist, da es dann beispielsweise um 180° gedreht für einen weiteren Zweck verwendet werden kann, unter Umständen mit einer weiteren Orientierung der Anschlussöffnungen. Dies bedeutet gleichzeitig einen höheren Freiheitsgrad für das Design/ die Konstruktion des Feldes, ohne dass die Anzahl bereitzustellender Module erhöht werden müsste. Unter Modularität wir die vielseitige Verwendbarkeit des Gehäuses verstanden. So ist das Gehäuse sowohl in Konfigurationen mit Doppel-Sammelschiene als auch in solchen mit Einfach-Sammelschiene und/oder als Brückenmodul einsetzbar.

Insbesondere durch die flächenmäßige Anordnung der Öffnungen in jeweiligen Öffnungs-Ebenen trägt zum erleichterten Einbau und Ausbau des Moduls/Gehäuses bei. Beispielsweise kann das Gehäuse sowohl in Richtung der ersten Gerade als auch in Richtung der zweiten Gerade in ein Schaltfeld ein- und ausgebaut werden. Sogar das gesamte Schaltfeld kann in einer dieser Richtungen ein- und ausgebaut werden. Das erlaubt insbesondere einen schnellen Ausbau und Austausch des Schaltanlagenmoduls im Reparatur- oder Wartungsfall. Durch diese Vorteile lassen sich verbesserte Reparatur- und Wartungskonzepte realisieren.

Obwohl aufgrund der Mehrfachfunktionalität die Komplexität des Gehäuses im Vergleich zu konventionellen GIS-Gehäusen höher ist, lässt es sich dennoch kostengünstiger herstellbar als drei weniger komplexe einphasige Gehäuse.

Bei einem Einsatz als Sammelschienengehäuse ist das erfindungsgemässe Gehäuse aufgrund seiner Geometrie bezüglich bekannten Sammelschienengehäusen mit kreisförmigem Querschnitt, wobei die darin geführten Phasenleiter zwecks Isolierung gegeneinander und gegenüber dem Sammelschienenrohr bei optimaler Raumausnutzung jeweils an den Ecken eines gleichseitigen Dreiecks angeordnet sind, grundsätzlich idealer, da es eine Anschlussgeometrie und demnach ein einfacheres Wartungskonzept ermöglicht.

Falls eine Aussenfläche des Gehäuses bezüglich einer konvexen Einhüllenden zumindest partiell eingezogen ausgebildet ist, ist die Volumenreduktion der Kammer und der daraus hervorgehenden Isoliergasmenge weiter verringerbar. Die Einhüllende beschreibt die globale Form der Gehäuse-Außenfläche ohne Rücksicht auf für diese Form irrelevante lokale Elemente wie Schrauben, Griffe, usw. Die Einhüllende wird als diejenige Form verstanden, welche sich ergibt, wenn man das Gehäuse mit einer gespannten Folie umwickelt, wobei die die Einhüllende definierende Folie jeweils nur an den Vorsprüngen, etwa der Kontur der flanschartigen Adapterabschnitte und dergleichen aufliegen würde. Die Gehäuse-Außenfläche hat somit konkave Einbuchtungen gegenüber der Einhüllenden. Je nach Ausbildungsform können diese Einbuchtungen in einem Übergangsbereich zwischen den ersten bzw. zweiten Anschluss-Öffnungen und einem rohrartigen Hauptkammerabschnitt vorhanden sein. Je nach Anforderungen weist die Kammer des Gehäuses beispielsweise eine Innenform von drei parallel zueinander verlaufend angeordneten Zylindervolumen aufweist, welche durch einen Querkanal miteinander verbunden sind. Falls erforderlich weist der Querkanal und damit dessen Flansch einen größeren Durchmesser /Querschnitt auf als die Anschlussöffnungen. Eine derartige Ausführungsform kann insbesondere dann erwünscht sein, wenn der Querkanal für Montage- und Servicezwecke dienen soll.

Je nach Bedarf ist die zweite Öffnungs-Ebene (E2) geneigt oder parallel zur ersten Öffnungs-Ebene (E1) verlaufend angeordnet. In einer Weiterentwicklung dieser Basisausführungsform ist die erste Gerade gegenüber der ersten Geraden so versetzt, dass sich die erste Gerade und die zweite Gerade nicht schneiden. Als besonders vielseitig einsetzbar hat sich eine Ausführungsform des Gehäuses erwiesen, dessen zweite Gerade parallel zur ersten Geraden verläuft, etwa wenn die mindestens zwei zweiten Anschlussöffnungen auf einer den mindestens zwei ersten Anschlussöffnungen gegenüberliegenden Seite des Gehäuses angeordnet sind. Ist das Gehäuse ein Sammelschienengehäuse, dessen fünfte, sich normal zu den ersten Anschlussöffnungen erstreckende Ebene mit der ersten Geraden in derselben Ebene liegt, wie eine sechste Ebene, in welcher die zweite Gerade liegt und welche sich normal zu den ersten Anschlussöffnungen erstreckt, so sind damit besonders vielseitig einsetzbare Schaltfelder und/oder Unterstationen erzielbar. Dies gilt insbesondere dann, wenn das Gehäuse bezüglich der zwei Geraden um eine dazwischen liegende Ebene spiegelsymmetrisch oder bezüglich der zwei Geraden um eine dazwischen Rotationsachse rotationssymmetrisch ist.
Hinsichtlich der Leistungsdichte pro Bauvolumen ist eine derartige Ausführungsform vorteilhaft, weil sie im beispielhaften Fall eines Sammelschienengehäuses gegenüber den bekannten Gehäusen für die Aufnahme von dreiphasigen Trenn- und/oder Erdungsschaltern beziehungsweise für Sammelschienensysteme mit dem erfindungsgemäßen Gehäuse ein im Vergleich zu bekannten GIS-Gehäusen extrem schmale Gehäusebauart ermöglicht. Diese ermöglicht dem damit ausgestatteten GIS-Modul selbst auf verhältnismässig kleiner Anschlussfläche beim Adapterabschnitt ausreichend Montagefläche, ohne Abstriche bei der Funktionalität hinnehmen zu müssen.
In einer weiterentwickelten Ausführungsform weist das Hochspannungsschaltanlagengehäuse mindestens zwei dritte Anschlussöffnungen auf, welche eine dritte Anschlussgruppe von Anschlussöffnungen bilden. Diese mindestens zwei dritten Anschlussöffnungen sind jeweils zur Aufnahme eines separaten Phasenleiters geformt, wobei die mindestens zwei dritten Anschlussöffnungen flächenmäßig in einer dritten Öffnungs-Ebene angeordnet sind und umfangsseitig in dritte flanschartige Adapterabschnitte münden.
Ist das Gehäuse beispielsweise ein Sammelschienengehäuse, so ist eine Ausführungsform realisierbar, bei der die dritte Öffnungs-Ebene quer zur ersten Öffnungs-Ebene und/oder zur zweiten Öffnungs-Ebene angeordnet ist, insbesondere rechtwinklig zur ersten Öffnungs-Ebene und/oder zur zweiten Öffnungs-Ebene.
Je nach Bedarf kann sich eine Variation des Gehäuses als vorteilhaft erweisen, bei welcher die mindestens zwei dritten Anschlussöffnungen entlang einer dritten Geraden angeordnet sind. Je nach Gegebenheiten liegt diese dritte Gerade in der vierten Ebene, welche sich quer, insbesondere rechtwinklig zur ersten Ebene, zur zweiten Ebene und zur dritten Ebene erstreckt - vorzugsweise rechtwinklig dazu. Um die Geometrie der Phasenleiter im Innern der Kammer möglichst einfach halten zu können, ist es empfehlenswert, wenn eine jede der ersten Anschlussöffnungen paarweise mit einer jeweiligen der zweiten Anschlussöffnungen angeordnet ist, insbesondere über je eine Verbindungsgerade, welche sich parallel zur dritten Geraden erstreckt. Anders ausgedrückt liegend die Verbindungsgeraden dann in einer vierten Ebene, welche die erste Gerade, die zweite Gerade und die dritte Gerade enthält, so dass sich die ersten und dritten Anschlussöffnungen gegenüberstehen.
Für Montage- und Wartungswecke ist eine Ausführungsform denkbar, bei der die mindestens zwei ersten Anschlussöffnungen, die mindestens zwei zweiten Anschlussöffnungen und die mindestens zwei dritten Anschlussöffnungen jeweils einen separaten Zugang zur Kammer von außerhalb des Gehäuses bilden.
Für die Realisierung einer Schaltanlage mit möglichst hoher Modularität ist ein Gehäuse zweckdienlich, dessen erste Anschlussgruppe von Anschlussöffnungen und/oder die zweite Anschlussgruppe von Anschlussöffnungen und/oder die dritte Anschlussgruppe von Anschlussöffnungen jeweils in einem gleichmässigen Reihenabstand voneinander entfernt sind. Anders ausgedrückt bedeutet dies, dass jeweilige Mitten der mindestens zwei ersten Anschlussöffnungen in einem gleichmäßigen Einheits-Abstand zueinander entlang der ersten Geraden aufgereiht sind, und / oder jeweilige Mitten der mindestens zwei zweiten Anschlussöffnungen in einem gleichmäßigen Einheits-Abstand zueinander entlang der zweiten Geraden aufgereiht sind, und / oder jeweilige Mitten der mindestens zwei dritten Anschlussöffnungen in einem gleichmäßigen Einheits-Abstand zueinander entlang der dritten Gerade (4') aufgereiht sind.
Bei einem geometrisch weiterentwickeltes Gehäuse sind die flanschartigen Adapterabschnitte der Anschlussöffnungen der ersten Gruppe von Anschlussöffnungen und/oder der Anschlussöffnungen der zweiten Gruppe von Anschlussöffnungen und/oder gegebenenfalls Anschlussöffnungen der der dritten Gruppe von Anschlussöffnungen jeweils zumindest teilweise in einen Wandabschnitt des Hochspannungsschaltanlagengehäuses integriert. Ein solches Gehäuse ist besonders herstellstellfreundlich, weil es sich beispielsweise leicht giessen lässt. Durch die Verschmelzung der Flanschabschnitte erhöht sich die Resistenz gegen unerwünschte mechanische Einwirkungen, wie etwa Schläge. Zudem lassen sich die integrierten Adapterabschnitte besser mechanisch bearbeiten, als einzelne Adapterabschnitte, da erstere typischerweise aufgrund der höheren Steifigkeit weniger zum Schwingen neigen, als Letztere.
Sollte beispielsweise die Forderung an das Gehäuse bestehen, dass es einen bezüglich einer Kontaktfläche der flanschartigen Adapterabschnitte von Hinten zugängliche Flanschfläche aufweist, etwa um Schrauben, Muttern oder dergleichen ein- oder anbringen zu können, so bietet sich eine Ausführungsform des Gehäuses an, bei welchem die mindestens zwei ersten Anschlussöffnungen und / oder die mindestens zwei zweiten Anschlussöffnungen und / oder gegebenenfalls die mindestens zwei dritten Anschlussöffnungen über je einen separaten Rohrstummel mit der Kammer verbunden sind. Je nach Ausführungsform des Rohrstummels weist das Gehäuse pro Phasenleiter einen separaten Rohrstummel auf.
Bei Bedarf sind die flanschartigen Adapterabschnitte der ersten Gruppe von Anschlussöffnungen und/oder der zweiten Gruppe von Anschlussöffnungen und/oder gegebenenfalls der dritten Gruppe von Anschlussöffnungen jeweils zumindest teilweise in einen gemeinsamen Adapterabschnitt integriert.
Für einen Einsatz in einer gasisolierten Hochspannungsschaltanlage muss das Gehäuse als Druckbehälter gestaltet sein, welches im Betrieb des Hochspannungsschaltanlagengehäuses einem Innendruck in der Kammer von mindestens 2 bar standhält.
Im Hinblick auf hohe Funktionssicherheit bei gleichzeitig günstiger Handhabbarkeit bei der Montage ist das Flanschgehäuse in Leichtbauweise und/oder aus einem Leichtwerkstoff gefertigt, insbesondere Leichtmetall.
Vorzugsweise bestehen die erfindungsgemäß Flanschgehäuse aus einer Aluminiumlegierung der AlMg- oder AlSi-Reihe, wobei das Gehäuse bei Bedarf als Gußteil, insbesondere als einstückiges Gussteil herstellbar ist.
Stattdessen oder in Kombination dazu kann zur Herstellung der erfindungsgemäßen Flanschgehäuse auch faserverstärkter Kunststoff vorgesehen sein.
In einer alternativen Ausführungsform des Gehäuses mit nur einer einzigen Anschlussgruppe von Anschlussöffnungen, weist das Hochspannungsschaltanlagengehäuse wiederum eine Kammer zur Aufnahme von mindestens zwei Phasenleitern unterschiedlichen elektrischen Potentials im Betrieb des Hochspannungsschaltanlagengehäuses auf, wobei die Kammer von ausserhalb des Hochspannungsschaltanlagengehäuses über mindestens zwei Anschlussöffnungen zugänglich ist. Im Betrieb des Hochspannungsschaltanlagengehäuses sind die mindestens zwei Phasenleiter durch ein Isoliergas elektrisch voneinander isoliert in der Kammer angeordnet. Die mindestens zwei ersten Anschlussöffnungen sind flächenmäßig in der ersten Öffnungs-Ebene und entlang der ersten Gerade angeordnet. Wiederum bilden die mindestens zwei ersten Anschlussöffnungen eine erste Anschlussgruppe von Anschlussöffnungen, welche zur Aufnahme jeweils eines Phasenleiters entsprechend geformt sind. Zudem münden die mindestens zwei ersten Anschlussöffnungen umfangsseitig in einen gemeinsamen flanschartigen Adapterabschnitt, der zum mechanischen Anschliessen des Hochspannungsschaltanlagengehäuses an ein benachbartes Hochspannungsschaltanlagengehäuse dient.

Die im Zusammenhang mit dem Gehäuse genannten Vorteile und Effekte gelten sinngemäss auch für eine gasisolierte Schaltanlage mit mindestens einem derartigen Gehäuse.

In der Zeichnung sind Ausführungsbeispiele der Erfindung rein schematisch dargestellt. Dabei zeigt:
- Fig. 1: eine dreidimensionale Ansicht einer ersten Ausführungsform des me- tallgekapselten Gehäuses einer gasisolierten Hochspannungsschalt- anlage;
- Fig. 2: eine dreidimensionale Ansicht einer zweiten Ausführungsform des me- tallgekapselten Gehäuses einer gasisolierten Hochspannungsschalt- anlage;
- Fig. 3: eine dreidimensionale Ansicht einer dritten Ausführungsform des me- tallgekapselten Gehäuses einer gasisolierten Hochspannungsschalt- anlage; und
- Fig. 4: eine dreidimensionale Ansicht einer vierten Ausführungsform des me- tallgekapselten Gehäuses einer gasisolierten Hochspannungsschalt- anlage.

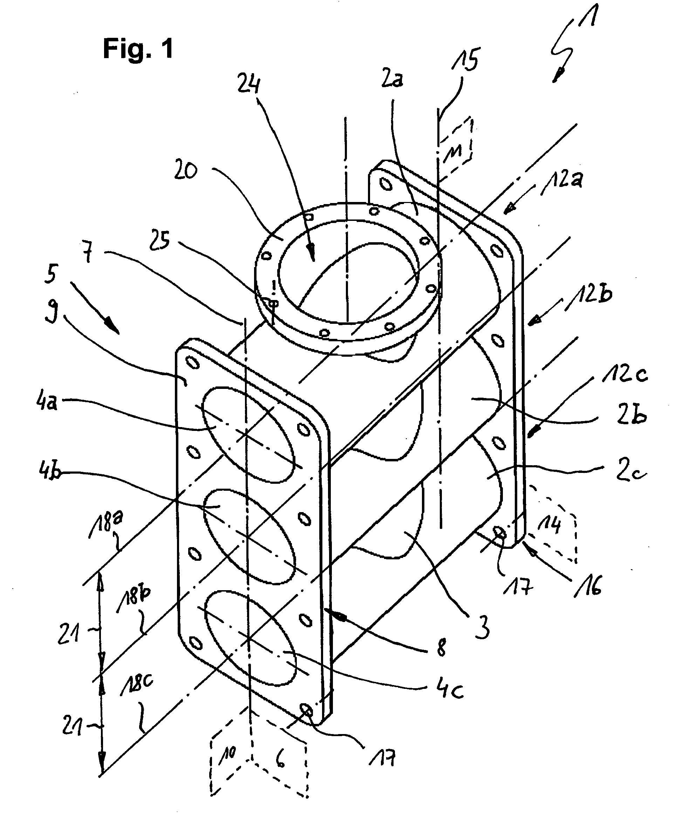

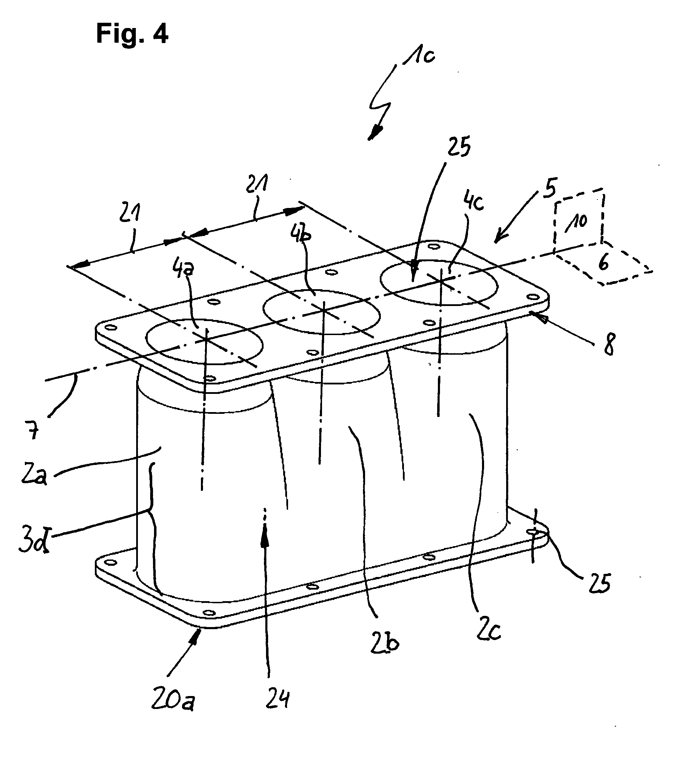

Die Figur 1 zeigt eine Schrägansicht auf eine erste Ausführungsform des metallgekapselten Gehäuses 1. Das als Sammelschienengehäuse konzipierte Gehäuse 1 umfasst drei erste Rohrabschnitte 2a, 2b, 2c, welche miteinander hydraulisch über einen quer dazu angeordneten, zweiten Rohrabschnitt 3 miteinander verbunden sind. Die drei ersten Rohrabschnitte 2a, 2b, 2c derselben Länge sind parallel nebeneinander angeordnet und dienen jeweils zur Aufnahme eines nicht gezeigten Phasenleiters. Alle drei ersten Rohrabschnitte 2a, 2b, 2c weisen je eine erste Anschlussöffnung 4a, 4b, 4c auf, welche zusammen eine erste Anschlussgruppe 5 bilden. Die drei ersten Anschlussöffnungen 4a, 4b, 4c sind flächenmäßig in einer ersten Öffnungs-Ebene und entlang einer ersten Geraden 7 angeordnet. Die drei ersten Anschlussöffnungen 4a, 4b, 4c münden umfangsseitig in einen ersten, gemeinsamen flanschartigen Adapterabschnitt 8. Der erste flanschartige Adapterabschnitt 8 erstreckt sich in Richtung der ersten Öffnungs-Ebene 6. Der erste flanschartige Adapterabschnitt 8 dient zum mechanischen Anschliessen des Gehäuses 1 an ein benachbartes Hochspannungsschaltanlagengehäuse. Je nach Ausführungsform des Gehäuses dient eine erste Flanschfläche als direkte mechanische Kontaktfläche als mechanischer Gegenkontakt für das benachbarte Hochspannungsschaltanlagengehäuse.
Drei zweite Anschlussöffnungen 12a, 12b, 12c (in Figur 1 nicht beziehungsweise nur mit Pfeilen stilisiert dargestellt), welche eine zweite Anschlussgruppe 13 bilden, sind flächenmäßig in einer zweiten Öffnungs-Ebene 14 und entlang einer zweiten Geraden 15 angeordnet. Analog zu den drei ersten Anschlussöffnungen münden auch die drei zweiten Anschlussöffnungen umfangsseitig in einen zweiten, gemeinsamen flanschartigen Adapterabschnitt 16. Der zweite flanschartige Adapterabschnitt 16 dient zum mechanischen Anschliessen des Gehäuses 1 an ein weiteres, benachbartes Hochspannungsschaltanlagengehäuse. Der zweite flanschartige Adapterabschnitt 16 erstreckt sich in Richtung einer zweiten Öffnungs-Ebene 14 und dient je nach Ausführungsform des Gehäuses wiederum als direkte mechanische Kontaktfläche für ein benachbartes Hochspannungsschaltanlagengehäuse. Analog zu den ersten Anschlussöffnungen 4a, 4b, 4c sind die zweiten Anschlussöffnungen 12a, 12b, 12c jeweils zur Aufnahme eines separaten Phasenleiters geformt.
Der erste Adapterabschnitt 8 und der zweite Adapterabschnitt 16 sind jeweils mit Anschlussmitteln in Form von Durchgangslöchern 17 für die Aufnahme einer Schraubverbindung ausgestattet. Ferner sind die Anschlussöffnungen 4a, 4b, 4c, 12a, 12b, 12c in den gemeinsamen flanschartigen Adapterabschnitten 8, 16 jeweils von Einformungen eingefasst, welche zur Aufnahme von hier nicht gezeigten Dichtungen dienen, die darin einlegbar sind, um eine gasdichte Verbindung zum benachbarten GIS-Modul bzw. -Gehäuse gewährleisten zu können. Um die nicht gezeigten Dichtungen und/oder Isolatoren verdrehsicher in Position zu halten sind die Einformungen asymmetrisch ausgestaltet. Hinsichtlich der Geometrie der Einformungen wird an dieser Stelle auf die Figuren der Patentanmeldungen DE102009022103.4 und DE102009022105.0 derselben Anmelderin verwiesen.
Die zweite Öffnungs-Ebene 14 erstreckt sich parallel zur ersten Öffnungs-Ebene 6 und die erste Gerade 7 erstreckt sich ebenfalls parallel zur zweiten Gerade 15. Normal zur ersten Öffnungs-Ebene 6 erstreckt sich eine fünfte Ebene 10, während sich normal zur zweiten Öffnungs-Ebene 14 eine sechste Ebene 11 erstreckt. Eine jede der ersten Anschlussöffnungen 4a, 4b, 4c ist mit einer ihr gegenüberliegend angeordneten, zweiten Anschlussöffnung 12a, 12b, 12c über eine Verbindungsgerade 18a, 18b, 18c verbunden. Diese Verbindungsgeraden 18a, 18b, 18c liegen in einem Einheits-Abstand 21 voneinander entfernt in der fünften Ebene 10, beziehungsweise der sechsten Ebene 11, welche hier deckungsgleich sind. Zwischen der ersten Geraden 7 und der zweiten Geraden 15 ist eine parallel zu diesen verlaufende Rotationsachse 19 angeordnet. Konzentrisch zu dieser Rotationsachse erstreckt sich der zweite Rohrabschnitt 3, welcher quer zu den Verbindungsgeraden 18a, 18b, 18c der ersten Rohrabschnitte 2a, 2b, 2c angeordnet ist und jeweils eine hydraulisch durchgehende Verbindung der drei ersten Rohrabschnitte 2a, 2b, 2c untereinander herstellt.
Dieser zweite Rohrabschnitt 3 besitzt in dieser Ausführungsform die gleiche Querschnittform wie die ersten Rohrabschnitte 2a, 2b, 2c. Während der als Querverbindung der ersten Rohrabschnitte 2a, 2b, 2c dienende zweite Rohrabschnitt 3 an einem Ende in einem randseitig angeordneten ersten Rohrabschnitt 2c endet, ist der zweite Rohrabschnitt auf der gegenüberliegenden Seite über den zuäussert liegenden ersten Rohrabschnitt 2a hinaus weitergeführt und mündet in einem weiteren Flansch 20. Dieser weitere Flansch 20 ist zum Anschluss des Gehäuses 1 an einem benachbarten GIS-Modul, beispielsweise an einem Leistungsschaltergehäuse vorgesehen. Der weitere Flansch 20 ermöglicht wie die ersten Anschlussöffnungen 4a, 4b, 4c und die zweiten Anschlussöffnungen 12a, 12b, 12c jeweils einen separaten, direkten Zugang zu einer gemeinsamen Kammer 24 im Innern des Gehäuses 1 von außerhalb des Gehäuses her.
Der weitere Flansch 20 des einstückigen Gehäuses 1 ist mit weiteren Anschlussmitteln 25 in Form von Durchgangslöchern 25 für die Aufnahme einer Schraubverbindung ausgestattet.
Ein Öffnungsquerschnitt des weiteren Flansches 20 entspricht der lichten Weite des zweiten Rohrabschnitts 3 und bietet demgemäß ausreichend Raum zur elektrisch unproblematischen, das heißt mit ausreichendem Isolierabstand, Unterbringung der durch ihn herausführbaren Phasenleiter.
Demgegenüber sind die Öffnungsquerschnitte der ersten und zweiten Anschlussöffnungen kleiner vorgesehen, da hier auch jeweils nur Phasenleiter durch sie hindurchgeführt werden soll.

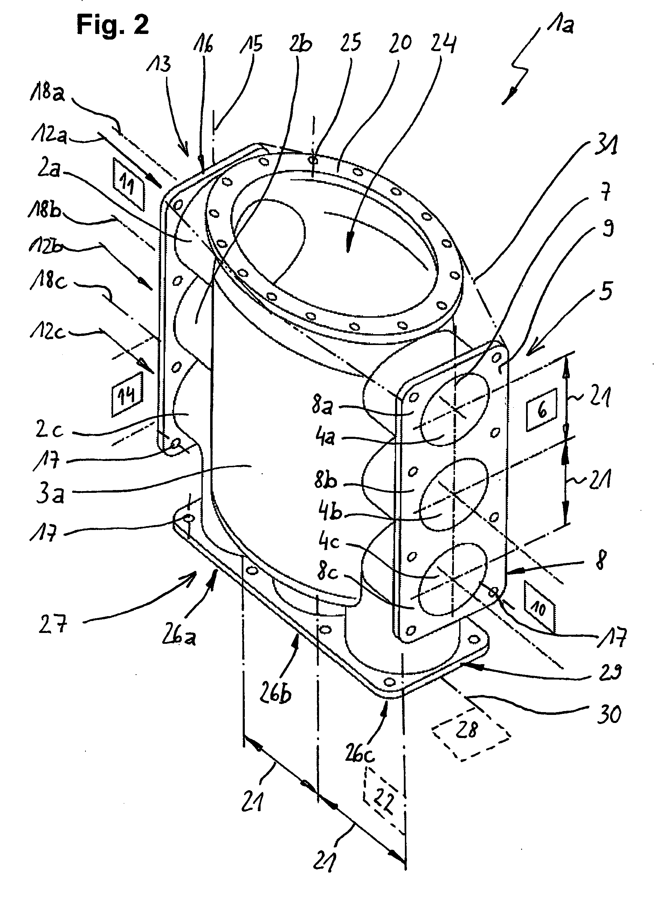

Die Figur 2 zeigt eine Schrägansicht auf eine zweite Ausführungsform des metallgekapselten Gehäuses 1 a. Gleiche oder gleich wirkende Elemente, wie jene der ersten Ausführungsform sind mit denselben oder zumindest ähnlichen Bezugszeichen versehen. Nachstehend werden vor allem die Unterschiede des Gehäuses 1a gemäss der zweiten Ausführungsform zum Gehäuse 1 der ersten Ausführungsform erläutert.
Im Unterschied zur ersten Ausführungsform 1 des Gehäuses weist der zweite Rohrabschnitt 3a nicht einen kreisrunden Querschnitt, sondern einen ovalen Querschnitt auf, so dass eine resultierende Gehäuselänge grösser als eine resultierende Gehäusebreite ist. Bei Bedarf sind auch andere Querschnittsformen als oval einsetzbar.
Anstelle des 'blinden' Endes im randseitigen ersten Rohrabschnitt ist die Kammer 24 via den zweiten Rohrabschnitt 3a über drei dritte Anschlussöffnungen 26a, 26b, 26c von Ausserhalb des Gehäuses 1a direkt zugänglich. Diese dritte Anschlussöffnungen 26 bilden eine dritte Anschlussgruppe 27 und sind jeweils zur Aufnahme eines separaten Phasenleiters geformt. Analog zu den Anschlussöffnungen der ersten Anschlussgruppe 5 und zur zweiten Anschlussgruppe 13 liegen auch die dritten Anschlussöffnungen 26a, 26b, 26c flächenmäßig in einer dritten Öffnungs-Ebene 28 angeordnet sind und münden umfangsseitig in einen gemeinsamen, dritten flanschartigen Adapterabschnitt 29. Die drei dritten Anschlussöffnungen 26a, 26b, 26c (in Figur 1 nicht beziehungsweise nur mit Pfeilen stilisiert dargestellt), entlang einer dritten Geraden 30 angeordnet. Die dritte Gerade 30 erstreckt sich parallel zu den Verbindungsgeraden 18a, 18b, 18c. Der dritte flanschartige Adapterabschnitt 29 dient zum ebenfalls zum mechanischen Anschliessen des Gehäuses 1a an ein weiteres, benachbartes Hochspannungsschaltanlagengehäuse. Hinsichtlich der Anschlussmittel 17 in Form von Durchgangslöchern 17 und gegebenenfalls von Einformungen wird auf die entsprechenden Textpassagen der ersten Ausführungsform 1 verwiesen.
Es bleibt zu erwähnen, dass sich die dritte Öffnungs-Ebene 28 rechtwinklig zur ersten Öffnungs-Ebene 6 und zur zweiten Öffnungs-Ebene 14 erstreckt und rechtwinklig zur fünften Ebene 10 beziehungsweise der sechsten Ebene 11 verläuft. Entsprechend erstreckt sich eine vierte Ebene 22, welche die dritte Gerade 30 enthält, normal zur dritte Öffnungs-Ebene 28.
Da der zweite Rohrabschnitt 3a durchmessermässig grösser als die ersten Rohrabschnitte ist, sind letztere lediglich als sich zwischen dem ersten und zweiten flanschartigen Adapterabschnitt und dem zweiten Rohrabschnitt 3a erstreckenden Rohrstummel erkenntlich. Diese Rohrstummel bilden infolge ihrer Geometrie eine strukturelle Verstärkung des Gehäuses 1 a, so wie die flanschartigen Adapterabschnitte 8, 16, 29. Durch dieses konstruktive Konzept erhält die Konstruktion des Gehäuses 1a selbst bei geringer Wanddicke eine überraschend gute Steifigkeit, welche zur Erreichung der Berstwerte erforderlich ist.
Eine Aussenfläche des Gehäuses 1a ist bezüglich einer konvexen Einhüllenden 31 zumindest partiell eingezogen ausgebildet, so dass die Volumenreduktion der Kammer und die im Betrieb des Gehäuses 1 a erforderliche Isoliergasmenge so gering wie möglich gehalten werden kann.

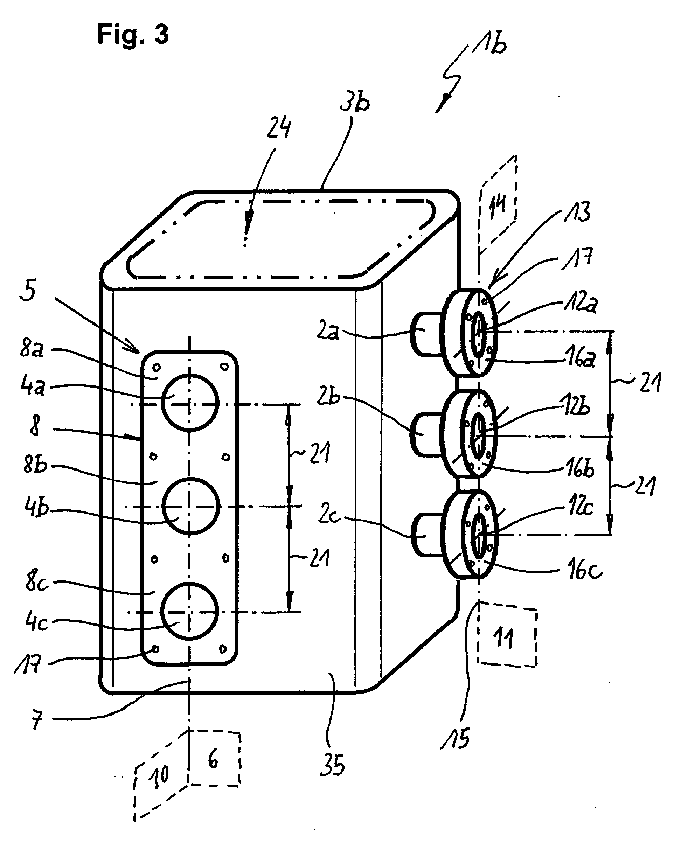

Die Figur 3 zeigt in Schrägansicht eine dritte Ausführungsform des Gehäuses 1b. Gleiche oder gleich wirkende Elemente, wie jene der ersten Ausführungsform 1 sind mit denselben oder zumindest ähnlichen Bezugszeichen versehen. Nachstehend werden vor allem die Unterschiede des Gehäuses 1 c gemäss der dritten Ausführungsform zum Gehäuse 1 der ersten Ausführungsform erläutert.
Die erste Anschlussgruppe 5 von ersten Anschlussöffnungen 4a, 4b, 4c liegen wiederum in der ersten Öffnungs-Ebene 6, während die zweite Anschlussgruppe 13 von zweiten Anschlussöffnungen 12a, 12b, 12c liegen wiederum in der zweiten Öffnungs-Ebene 14. Obwohl die erste Gerade 7 wiederum parallel zur zweiten Gerade 15 verläuft, erstreckt sich die erste Öffnungs-Ebene 6 quer zur zweiten Öffnungs-Ebene 14.
Weiter ist der gemeinsame flanschartige Adapterabschnitt 8a teilweise in einen Wandabschnitt 35 des einen rechteckartigen Querschnitt aufweisenden zweiten Rohrabschnittes 3b des Gehäuses 1 b integriert.
Anstelle eines gemeinsamen flanschartigen Adapterabschnitts schliessen sich umfangsseitig an die als Rohrstummel sichtbaren ersten Rohrabschnitte 2a, 2b, 2c je ein einzelner, separater zweiter flanschartiger Adapterabschnitt 16a, 16b, 16c an. Die anhand der Figur 4 erläuterte vierte Ausführungsform des Gehäuses 1 c unterscheidet sich gegenüber der in Figur 1 offenbarten Ausführungsform 1 des Gehäuses dadurch, dass der sich wiederum quer zu den Mittelachsen der ersten Anschlussöffnungen 4a, 4b, 4c erstreckende zweite Rohrabschnitt 3d endseitig bei den ersten Rohrabschnitten 2a, 2c nicht über einen stirnseitigen Flansch, sondern über einen sich längs erstreckenden weiteren Flansch 20a zugänglich ist.

### Bezugszeichenliste

- 1,1a,1b,1: c Hochspannungsschaltanlagengehäuse
- 2a,2b,2c: Erster Rohrabschnitt
- 3,3a,3b,3c: Zweiter Rohrabschnitt
- 4a,4b,4c: Erste Anschlussöffnung
- 5: Erste Anschlussgruppe
- 6: Erste Öffnungs-Ebene
- 7: Erste Gerade
- 8,8a,8b,8c: Erster flanschartiger Adapterabschnitt
- 9: Erste Flanschfläche
- 10: Fünfte Ebene
- 11: Sechste Ebene
- 12a,12b,12c: zweite Anschlussöffnung
- 13: zweite Anschlussgruppe
- 14: zweite Öffnungs-Ebene
- 15: zweite Gerade
- 16,16a,16b,16c: zweiter flanschartiger Adapterabschnitt
- 17: Anschlussmittel
- 18a,18b,18c: Verbindungsgerade
- 19: Rotationsachse
- 20,20a: Weiterer Flansch
- 21: Einheits-Abstand
- 22: Vierte Ebene
- 24: Kammer
- 25: Weiteres Anschlussmittel
- 26a,26b,26c: dritte Anschlussöffnung
- 27: dritte Anschlussgruppe
- 28: dritte Öffnungs-Ebene
- 29,29a,29b,29c: dritter flanschartiger Adapterabschnitt
- 30: dritte Gerade
- 31: Einhüllende
- 35: Wandabschnitt

## Patentansprüche

1. Hochspannungsschaltanlagengehäuse (1,1a,1b) mit einer Kammer (24), welche von ausserhalb des Hochspannungsschaltanlagengehäuses über mindestens zwei erste Anschlussöffnungen (4a,4b,4c) zugänglich ist, und wobei die Kammer (24) zur Aufnahme von mindestens zwei Phasenleitern von im Betrieb des Hochspannungsschaltanlagengehäuses unterschiedlichen elektrischen Potentials ausgebildet ist, welche Phasenleiter durch ein in der Kammer (24) präsentes Isoliergas elektrisch voneinander isoliert in der gemeinsamen Kammer (24) angeordnet sind, und wobei die mindestens zwei ersten Anschlussöffnungen (4a,4b,4c) flächenmäßig in einer ersten Öffnungs-Ebene (6) und entlang einer ersten Geraden (7) angeordnet sind, **dadurch gekennzeichnet, dass** die mindestens zwei ersten Anschlussöffnungen (4a,4b,4c) eine erste Anschlussgruppe (5) von Anschlussöffnungen (4a,4b,4c) bilden und jeweils zur Aufnahme eines separaten Phasenleiters geformt sind und umfangsseitig in erste flanschartige Adapterabschnitte (8,8a) münden, wobei die ersten flanschartigen Adapterabschnitte (8,8a) zum mechanischen Anschliessen des Hochspannungsschaltanlagengehäuses (1,1a,1b,1c) an ein benachbartes Hochspannungsschaltanlagengehäuse dienen, weiter **gekennzeichnet durch** mindestens zwei zweite Anschlussöffnungen (12a,12b,12c), welche eine zweite Anschlussgruppe (13) von Anschlussöffnungen (12a,12b, 12c) bilden, und jeweils zur Aufnahme eines separaten Phasenleiters geformt sind, und umfangsseitig in zweite flanschartige Adapterabschnitte (16,16a,16b,16c) münden, wobei die zweiten flanschartigen Adapterabschnitte (16,16a,16b,16c) zum mechanischen Anschliessen des Hochspannungsschaltanlagengehäuses (1,1a,1b, 1 c) an ein weiteres benachbartes Hochspannungsschaltanlagengehäuse dienen, und wobei die mindestens zwei zweiten Anschlussöffnungen (12a,12b,12c) flächenmäßig in einer zweiten Öffnungs-Ebene (14) und entlang einer zweiten Geraden (15) angeordnet sind.

2. Hochspannungsschaltanlagengehäuse nach Anspruch 1, **dadurch gekennzeichnet, dass** die zweite Öffnungs-Ebene (14) geneigt, quer oder parallel zur ersten Öffnungs-Ebene (6) verlaufend angeordnet ist.

3. Hochspannungsschaltanlagengehäuse nach Anspruch 1 oder 2, **dadurch gekennzeichnet, dass** die zweite Gerade (15) gegenüber der ersten Geraden (7) so versetzt ist, dass sich die erste Gerade (7) und die zweite Gerade (15) nicht schneiden.

4. Hochspannungsschaltanlagengehäuse nach Anspruch 3, **dadurch gekennzeichnet, dass** die zweite Gerade (15) parallel zur ersten Geraden (7) verläuft.

5. Hochspannungsschaltanlagengehäuse nach einem der Ansprüche 1 bis 4,
**dadurch gekennzeichnet, dass** das Hochspannungsschaltanlagengehäuse mindestens zwei dritte Anschlussöffnungen (26a,26b,26c) aufweist, welche eine dritte Anschlussgruppe (27) von Anschlussöffnungen (26a,26b,26c) bilden und jeweils zur Aufnahme eines separaten Phasenleiters geformt sind, wobei die mindestens zwei dritten Anschlussöffnungen (26a,26b, 26c) flächenmäßig in einer dritten Öffnungs-Ebene (28) angeordnet sind und umfangsseitig in dritte flanschartige Adapterabschnitte (29,29a,29b,29c) münden.

6. Hochspannungsschaltanlagengehäuse nach Anspruch 5, **dadurch gekennzeichnet, dass** die dritte Öffnungs-Ebene (28) quer zur ersten Öffnungs-Ebene (6) und/oder zur zweiten Öffnungs-Ebene (14) angeordnet ist, insbesondere rechtwinklig zur ersten Öffnungs-Ebene (6) und/oder zur zweiten Öffnungs-Ebene (14).

7. Hochspannungsschaltanlagengehäuse nach Anspruch 5 oder 6, **dadurch gekennzeichnet, dass** die mindestens zwei dritten Anschlussöffnungen (26a,26b,26c) entlang einer dritten Geraden (30) angeordnet sind.

8. Hochspannungsschaltanlagengehäuse nach einem der Ansprüche 5 bis 7,
**dadurch gekennzeichnet, dass** eine jede der ersten Anschlussöffnungen (4a,4b,4c) paarweise mit einer jeweiligen der zweiten Anschlussöffnungen (12a,12b,12c) angeordnet ist, insbesondere über je eine Verbindungsgerade (18a,18b,18c), welche sich parallel zur dritten Geraden (30) erstreckt.

9. Hochspannungsschaltanlagengehäuse nach einem der Ansprüche 5 bis 8,
**dadurch gekennzeichnet, dass** die mindestens zwei ersten Anschlussöffnungen (4a,4b,4c), die mindestens zwei zweiten Anschlussöffnungen (12a,12b, 12c) und gegebenenfalls die mindestens zwei dritten Anschlussöffnungen (26a,26b,26c) jeweils einen separaten Zugang zur Kammer (24) von außerhalb des Gehäuses bilden.

10. Hochspannungsschaltanlagengehäuse nach einem der Ansprüche 1 bis 9,
**dadurch gekennzeichnet, dass** die ersten flanschartigen Adapterabschnitte (8,8a) und/oder die zweiten flanschartigen Adapterabschnitte (16,16a, 16b,16c) und/oder gegebenenfalls die dritten flanschartigen Adapterabschnitte (29,29a,29b,29c) jeweils zumindest teilweise in einen Wandabschnitt (35) des Hochspannungsschaltanlagengehäuses integriert sind.

11. Hochspannungsschaltanlagengehäuse nach einem der Ansprüche 1 bis 10, **dadurch gekennzeichnet, dass** die mindestens zwei ersten Anschlussöffnungen (4a,4b,4c) und / oder die mindestens zwei zweiten Anschlussöffnungen (12a,12b, 12c) und / oder gegebenenfalls die mindestens zwei dritten Anschlussöffnungen (26a,26b, 26c) über je einen separaten Rohrstummel (2a,2b,2c) mit der Kammer verbunden sind.

12. Hochspannungsschaltanlagengehäuse nach einem der Ansprüche 1 bis 10, **dadurch gekennzeichnet, dass** die ersten flanschartigen Adapterabschnitte (8,8a) und/ oder die zweiten flanschartigen Adapterabschnitte (16,16a,16b,16c) und/oder gegebenenfalls die dritten flanschartigen Adapterabschnitte (29,29a,29b,29c) jeweils zumindest teilweise in einen gemeinsamen Adapterabschnitt integriert sind.

13. Hochspannungsschaltanlagengehäuse (1c), insbesondere Hochspannungsschaltanlagengehäuse nach einem der Ansprüche 1 bis 12, umfassend eine Kammer (24) zur Aufnahme von mindestens zwei Phasenleitern unterschiedlichen elektrischen Potentials im Betrieb des Hochspannungsschaltanlagengehäuses, wobei die Kammer (24) von ausserhalb des Hochspannungsschaltanlagengehäuses (1c) über mindestens zwei erste Anschlussöffnungen (4a,4b,4c) zugänglich ist, und wobei die mindestens zwei Phasenleiter im Betrieb des Hochspannungsschaltanlagengehäuses in der Kammer (24) durch ein Isoliergas elektrisch voneinander isoliert angeordnet sind, und wobei die mindestens zwei Anschlussöffnungen (4a,4b,4c) flächenmäßig in einer ersten Öffnungs-Ebene (6) und entlang einer ersten Geraden (7) angeordnet sind, **dadurch gekennzeichnet, dass** die mindestens zwei ersten Anschlussöffnungen (4a,4b,4c) zur Aufnahme jeweils eines Phasenleiters geformt sind und umfangsseitig in einen gemeinsamen flanschartigen Adapterabschnitt (8) münden, der zum mechanischen Anschliessen des Hochspannungsschaltanlagengehäuses (1c) an ein benachbartes Hochspannungsschaltanlagengehäuse dient.

14. Gasisolierte Hochspannungsschaltanlage mit einem Hochspannungsschaltanlagengehäuse gemäss einem der Ansprüche 1 bis 13.

15. Gasisolierte Hochspannungsschaltanlage nach Anspruch 14, **dadurch gekennzeichnet, dass** das Hochspannungsschaltanlagengehäuse (1,1a,1b) ein Segment einer, insbesondere dreiphasigen, Sammelschiene ist.
